# EUROPEAN PATENT APPLICATION

(11) **EP 1 810 564 A1**
(43) Date of publication of application: **25.07.2007**
(21) Application number: 07250217.2
(22) Date of filing: 19.01.2007
(51) Int. Cl.: A01K 13/00, A45D 8/34

(54) **Grooming aid and related methods**

(30) Priority: 19.01.2006 GB 0601046
(71) Applicant: Jacklin, Derek, Lincs, DN21 5NL (GB); Jacklin, Paula, Lincs, DN21 5LN (GB)
(72) Inventor: Jacklin, Derek, Willingham by Stow Nr Gainborough Lincs, DN21 5LN (GB)
(74) Representative: Gosnall, Toby

(57) **Abstract**

An equine grooming aid (100) comprising a body portion (108) around which, in use, hair is arranged to be wound, and one or more attachment portions (104, 106) arranged, in use, to be moved between an open position in which hair can be wound around the body portion (108) and a closed position in which hair wound around the body portion (108) is retained such that it does not unwind.

## Description

### Field of the invention

This invention relates to a grooming aid, in particular, but not exclusively for the mane of an equine, such as a horse, donkey or the like and related methods.

### Background of the invention

It is convenient to describe the background for this invention with reference to horses, although it does have wider applicability and could be applied to any animal or human having hair long enough to need tidying.

Before competitions it is known to plait a horses mane. Such plaiting is performed not only to make the horse look good but also to keep lose hair out of the way. Such plaiting can be time consuming and plaiting a mane by traditional means can take on the order of 30 minutes to an hour. This can be very time consuming, particularly if an owner needs to plait three or four horses before an event, which can often be the case.
One hair styling device, suitable for use with human hair and used for forming French knots, buns and the like, is disclosed in US 5,890,494. Several limitations exist with this device, such as the fact that the user is required to deform the device prior to use.

### Summary of the invention

According to a first aspect of the invention there is provided a grooming aid comprising a body portion around which, in use, hair is arranged to be wound, and one or more attachment portions arranged, in use, to be moved between an open position in which hair can be wound around the body portion and a closed position in which hair wound around the body portion is retained such that it does not unwind.

The grooming aid may be provided such that the body portion and/or the or each attachment portion are fabricated from a generally non-resilient material such that the non-resilience of the material is arranged to keep the attachment portions in the open or closed position. Such an arrangement may be advantageous as such an aid may not be required to use fastening means.

The generally non-resilient material may be provided as a loop. In such an arrangement the body portion may be provided by a portion of the loop and the one or more attachment portions may also be provided by a portion of the loop.

The loop may be provided by a length of non-resilient material that has been formed into roughly a loop, may be with the two ends roughly adjacent one another. Such an arrangement may be advantagoues as providing a single loop allows for ease of manufacture.

One or more sheets of material may be arranged to cover the loop. A hole may be provided in the or each sheet by removal of a portion of that sheet. The provision of a hole by removal of material may mean that a user may not be required to open the aid prior to use. This is advantagoues as it can often be awkward for the user to open such devices while holding a bunch of hair. This may be particularly true when using such devices on equines where the user may be required to use several aids along a mane, and/or simultaneously steady the equine.

According to a second aspect of the invention there is provided a method of grooming comprising attaching an aid comprising a body portion to a bunch of hair, rolling the bunch of hair around the body portion and subsequently moving attachment portions of the aid from an open position in which hair can wrapped around the body portion to a closed position in order to retain the aid in place.

According to a third aspect of the invention there is provided a method of training an equine's, or horse's mane comprising applying the method of the second aspect of the invention.

According to a fourth aspect of the invention there is provided a pack of aids according to the first aspect of the invention.

According to a fifth aspect of the invention there is provided an equine grooming aid comprising a body portion around which, in use, hair is arranged to be wound, and one or more attachment portions arranged, in use, to be moved between an open position in which hair can be wound around the body portion and a closed position in which hair wound around the body portion is retained such that it does not unwind, wherein the body portion and the or each attachment portions are provided by regions of a loop of non-resilient material.

According to a fifth aspect of the invention there is provided an equine grooming aid comprising a body portion around which, in use, hair is arranged to be wound, and one or more attachment portions arranged, in use, to be moved between an open position in which hair can be wound around the body portion and a closed position in which hair wound around the body portion is retained such that it does not unwind, wherein the body portion and the or each attachment portions are provided by regions of a loop of non-resilient material and the loop of resilient material being covered by one or more sheets of material having a portion removed therefrom to provide a hole allowing hair to be passed through both the material and the loop.

### Brief description of the drawings

There now follows by way of example only a detailed description of the present invention with reference to the accompanying drawings in which
**Figure 1** shows an embodiment of a grooming aid;
**Figure 2** shows an exploded view of the embodiment of Figure 1;
**Figure 3** shows a further embodiment of a grooming aid;
**Figure 4** shows a sequence of steps moved through in using a grooming aid according to embodiments of the invention;
**Figure 5** shows a flow chart outlining a method of using the grooming aid;
**Figure 6** shows a further embodiment of a grooming aid; and
**Figure 7** shows a further embodiment of a grooming aid comprising locking means.

### Detailed description of the drawing

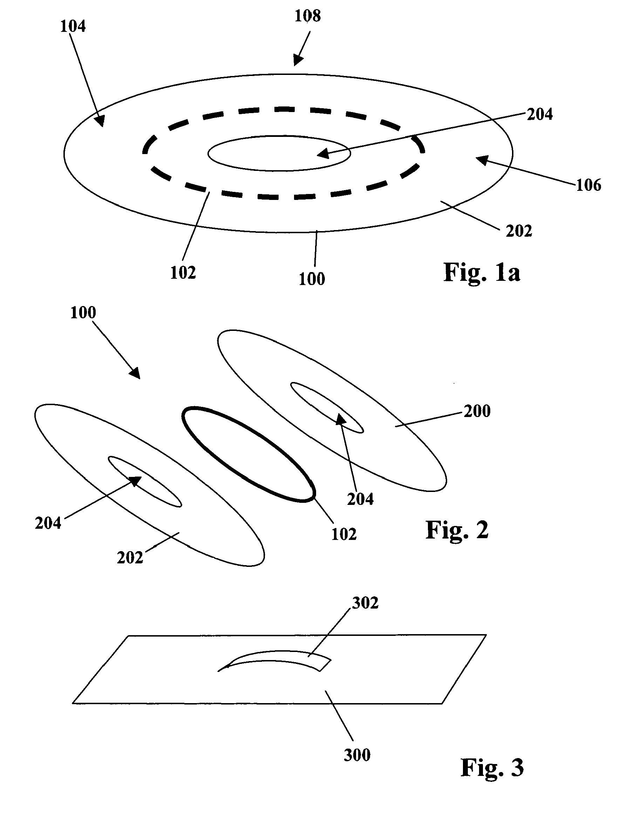

Figure 1 shows a grooming aid 100. This embodiment of the grooming aid 100 comprises a loop 102 of non-resilient material. The non-resilient material may be wire, a plastics material or any other suitable material which can be deformed and roughly retain the shape to which it has been deformed.

The loop 102 may not be a complete loop and could simply be a portion of non-resilient material that has been formed into roughly a loop and leaving the two ends adjacent one another. Other embodiments may be formed from a portion of non-resilient material such as a wire and have two end regions thereof joined to one another in order to form the loop 102. For example, the two end regions may be joined to one another by adhesive, welding, tying, wrapping with tape or other material, riveting, or any other suitable method.

In the embodiment shown in the Figure the loop of material 102 is retained between two sheets of material 200 and 202 which are best seen in Figure 2 which shows an exploded view of the embodiment of Figure 1. In this embodiment, the sheets of material are a fabric and in particular a velvet, or velvet like material such as velour. Such a material may be advantageous because it not only provides a pleasing look but also may provide friction to help grip hair to which the device is, in use, applied.

In this embodiment, although this need not be the case, the sheets of material are shaped as ellipses. An ellipse shaped region of material has been removed from a central region of each of the sheets of material 200, 202 to form a hole 204 therein. Again, the central region of material which has been removed need not be in the shape of an ellipse. In this embodiment the hole 204 is arranged such as to provide a permanent opening when grooming aid 100 is in an un-used position.

Other embodiments may not provide the aid as an ellipse and may provide the aid in any other plan shape such as a rectangle, diamond, parallelogram, or the like. Similarly the hole 204 may be provided in any other shape such as a rectangle, diamond, parallelogram, or the like. It is believed that it is advantageous for the aid to be wider than it is tall (as viewed in Figure 1) in order that attachments portions 104, 106 are provided by end regions of the aid 100 as will become apparent. An area between the attachment portions 104, 106, around which, in use, hair is wound may be thought of as being a body portion 108.

The two sheets of material are joined to one another to form a sandwich like structure with the non-resilient loop of material 102 held between the two sheets 200 and 202.

In one embodiment the two sheets of material 200 and 202 are stitched to one another at an outer region of the sheets and at a region around the hole 204. Thus, in such an embodiment the loop 102 can move around the hole 204 and is not attached to either of the sheets of material 200, 202. In other embodiments the two sheets may be adhered to one another, perhaps over substantially the whole of their area, or may be at edge regions of the hole 204 and the sheets 200, 202. Any other suitable fixing may be used.

In this embodiment, at least the outer surfaces of the sheets 200 and 202 (as shown in Figure 1) are textured such that they provide some resistance to hair sliding across them. Such a material selection is advantageous because it helps to maintain the aid in place. Such texturing may be provided by applying a coating to the sheets 200 and 202 or by selection of the material from which the sheets 200 and 202 are fabricated.

In the constructed aid, as seen in Figure 1, the hole 204 passes through the aid 100 and provides a retaining means through which hair can be passed.

The embodiment shown in Figures 1 and 2 may be varied as follows. Rather than having two sheets of material, between which the loop 102 is sandwiched, it may be possible to have a single sheet of material and fold at least a portion of the material back on itself to sandwich the loop 102 between the folded back portion and the sheet. Such an embodiment may be use less material, thereby costing less, than the embodiment shown in Figures 1 and 2, although it may be harder to fabricate and not be as aesthetically pleasing.

Figure 3 shows a further embodiment of an aid according to an embodiment of the invention which comprises a flat sheet like portion of material 300. In a central region of the sheet 300 there is provided a loop 302 which provides a retaining means. The sheet like portion of material 300 may be fabricated from a non-resilient material or may comprise a loop of non-resilient material covered in another material. The loop 302 need not be fabricated from a non-resilient material. Indeed, it is convenient to fabricate, or cover, the non-resilient material from a material which grips, in use, hair, in order that the aid 100 is held in place.

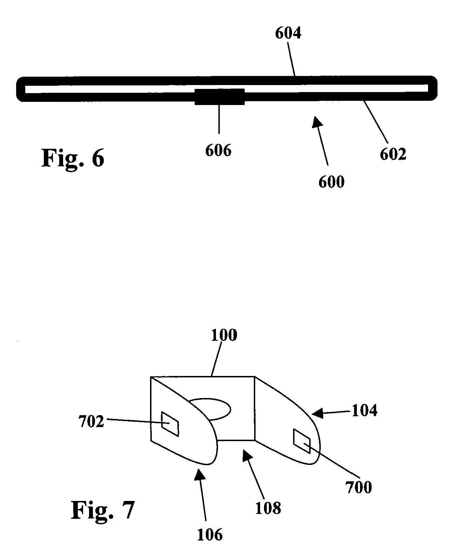

Figure 6 shows a further embodiment of an aid 600 which comprises a loop of non-resilient material. The loop is arranged to be relatively long when compared to its width such the gap between the long parts 602, 604 of the loop is relatively narrow. This embodiment is formed by bending a length of non-resilient material and joining the ends with a collar 606 or any other means as discussed above. It will be appreciated that other embodiments may be made by stamping, pressing or the like the aid from a sheet, or sheet like, material.

The embodiment of Figure 6, or indeed any other embodiment, may be covered in a material in order to provide a surface finish which provides friction to hair to which the aid is attached. One embodiment of the invention may achieve this covering by dip coating although it would be possible to adhere material, cover the material in a fabric (such as in the embodiment of Figure 1) or any other suitable means.

It will be appreciated that the outer surface of the aid need not be entirely covered with a material to provide a surface finish to grip the hair and only a portion of the surface may be so covered. Indeed, no such material may be provided in some embodiments.

Other embodiments of the invention are possible and the embodiments shown are intended to provide an idea of the variety of aids that could be possible. The retaining means is shown as a hole through the aid (Figure 1), as a loop (Figure 3) or as an opening in a larger loop (Figure 6). Other embodiments may provide any number of alternatives. For example, a clip, ties (such as ribbons or the like), etc. could all be used.

The sheet 300 is fabricated from a substantially non-resilient material such that it retains a shape to which it is bent or otherwise deformed.

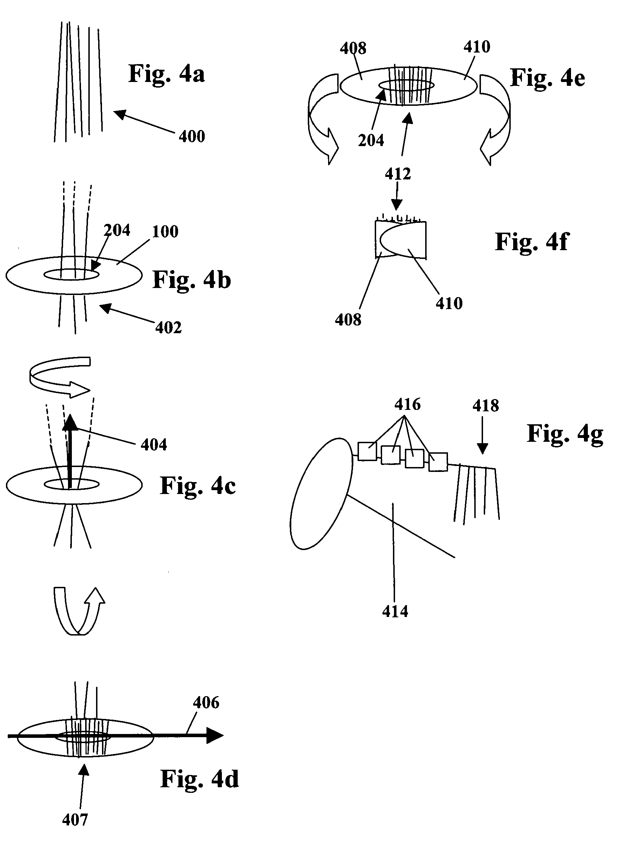

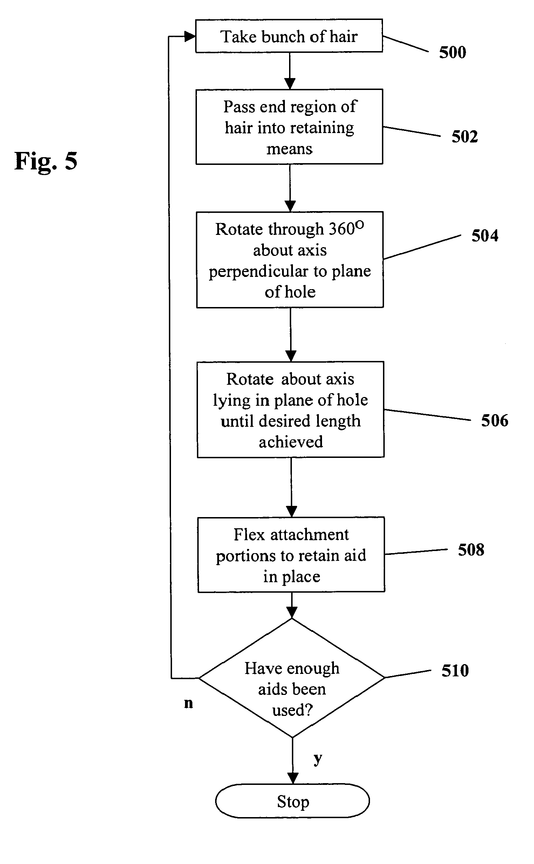

Figures 4 and 5 outline the steps that are undergone in using the aid to groom a horse's mane.

Figure 4a shows a bunch 400 of hair, in this embodiment part of a horse's mane, which is taken 500 in readiness for using the aid 100. In other embodiments this may be hair of any other animal or human. Although the aid 100 of Figure 1 is shown in Figure 4 the same method could be used for any other embodiment.

After the bunch 400 of hair has been taken the end region 402 of the bunch 400 is passed 502 into the retaining means 404 of the aid 100. In this embodiment this means that the end region 402 of the bunch is threaded through the hole 204 in the aid 100. Figure 4b shows the aid 100 having the end region of the hair 402 passed through the hole 204.

In this embodiment, the aid 100 is then rotated through generally 360° (i.e. one revolution) about an axis generally perpendicular to the plane of the hole 204 as is represented in Figure 4c and step 502 of Figure 5. The axis of rotation is shown at 404 in Figure 4c. In other embodiments the aid 100 may be rotated through many more revolutions - perhaps 2, 3, 4, 5, 6, 10, 15, or more, or any number in between (including half revolutions). In yet further embodiments, this step of rotating the aid 100 about the axis 404 may be omitted. It is however, thought that this step is advantageous because it can help to retain the aid 100 within the hair.

Next, the aid 100 is rotated about an axis generally lying in the plane of the hole 204 as shown in step 506 in Figure 5; this step may be thought of as rolling the hair around a body portion 407 of the aid; the body portion 407 being provided between the two attachment portions 104, 106. This axis is shown at 406 in Figure 4d for ease of reference. Rotation about this axis is repeated until the hair has reached its desired length. When using the aid to imitate plaiting of a horse's mane this would generally be repeated until substantially all of the bunch 400 of hair has been wound around the aid 100.

It will be seen from Figure 4e that the bunch of hair 400 is wound around a central region of the aid 100, in a region of the retaining means (the hole 204 in this embodiment). This leaves attachment portions 408, 410 (in this case end portions of the ellipse) uncovered by hair. The hair that is wound around the aid is visible when the aid is installed and as such the aid looks similar to a plait that has been placed in the mane by traditional methods.

As can be seen in Figure 4f, these attachment portions 408, 410 are flexed over the hair 412 in a central region of the aid. Flexing of the attachment portions 408, 410 in this manner retains the device over the hair 412.

When the aid 100 is has the body portion exposed such that hair may be wound around the body portion the attachment portions 104, 106 may be thought of as being in an open position. When the attachment portions are moved to retain the aid 100 on the hair (as can be seen in Figure 4f) they may be thought of as being in a closed position.

In this embodiment it is the non-resilient material which holds the attachment portions in the closed / open positions. However, this need not be the case and a locking means may be provided on or associated with the attachment portions in order to hold them in the closed position. For example, the or each attachment portion may be provided with a clasp, button, ribbon, portion of velcro^{™} or the like. In embodiments in which a locking means is provided there may or may not be provided a non-resilient material.

An embodiment comprising a locking means is shown in Figure 7. In this Figure it can be seen that each of the attachment portions 104, 106 has a portion of Velcro^{™} attached thereto such that when the attachment portions are moved to the closed position the portions of Velcro^{™} engage one another and the attachment portions 104, 106 are thus locked in the closed position.

It will be appreciated that the embodiments described above do not require locking means to hold the attachment portions in place as the resilience of the material of the loop is sufficient to achieve this. As such, the embodiments of the present invention may be simpler and easier to fabricate if they do not comprise a locking means.

When grooming a horse's mane, this method is repeated a number of times 508 for different bunches of the mane until as much of the mane has been tidied as is desired by the person grooming the horse. Generally, this would be once substantially the entire mane has been treated. It is likely that it would take roughly 10 to 15 aids to groom a mane in the manner described. This would of course be dependent upon a number of factors including the length of the mane, the width of the bunch of hair retained in one aid, the width of the aid, etc. However, in order for the mane to appear similar to traditional plaiting methods it is believed that between 10 and 15 aids would be required per mane.

Figure 4g shows a representation of a horse's head and neck 414 to which four aids 416 have been applied. A portion of un-treated mane 418 remains to which further aids could be applied if desired.

It is believed that the method outlined in Figure 5 could be applied to the whole of a horse's mane in roughly 5 to 15 minutes (or any time in between these extremes) which provides a significant time saving over traditional plaiting methods.

In some embodiments the method may only be applied to a portion of a mane. Such embodiments are believed to be advantageous in situations in which a rug, or the like, place on an animal and causes wear to the hair of the animal. This may occur in horses, or other equines, on which rugs are commonly placed and may rub the mane, thus causing damage thereto. The method may be applied to areas of the hair (such as the mane) which may be damaged in order to protect that portion of the hair.

Other embodiments of the invention may be used to train an area of hair, such as the main of an equine, to grow in a predetermined manner. It is known that the hair of an equine's mane can grow to both sides of the equine's neck, although if is aesthetically preferred for the hair to grow to only a single side. The method may be applied to the mane to cause the hair to grow only to the preferred side.

The embodiments described above have two attachment portions 104, 106 each of which comprises an end region of the aid. However, it is conceivable that there may be other numbers of attachment portions. For example, there may be a single attachment portion.

## Claims

1. An equine grooming aid (100) comprising a body portion (108) around which, in use, hair is arranged to be wound, and one or more attachment portions (104, 106) arranged, in use, to be moved between an open position in which hair can be wound around the body portion (108) and a closed position in which hair wound around the body portion (108) is retained such that it does not unwind.

2. An aid (100) according to claim 1 in which at least a portion of the body portion (108) and/or the or each attachment portion (104, 106) are fabricated from a generally non-resilient material such that the non-resilience of the material is arranged to keep the attachment portions (104, 106) in the open or closed position.

3. An aid (100) according to claim 2 in which the non-resilient material comprises a loop (102) of material.

4. An aid (100) according to claim 3 which comprises one or more sheets (200, 202), each of which has a hole (204) therethrough.

5. An aid (100) according to claim 4 in which the hole (204) through a sheet (200, 202) is provided by a portion of material removed from the sheet (200, 202).

6. An aid (100) according to claim 5 in which the non-resilient material is provided in a region around the hole (204) and preferably substantially surrounds the hole (204).

7. An aid (100) according to any of claims 2 to 6 in which the non-resilient material comprises one or more pieces of wire.

8. An aid (100) according to any preceding claim in which the aid (100) further comprises a locking means arranged to maintain the or each attachment portion (104, 106) in the closed position.

9. An aid (100) according to any preceding claim which further comprises a retaining means (302) arranged to retain a bunch of hair within the aid (100).

10. An aid (100) according to claim 9 in which the retaining means (302) comprises a hole (102) through the aid (100).

11. An aid (100) according to any preceding claim in which at least a portion of the outer surface is textured such that, in use, the surface creates friction with hair to which the aid (100) is applied; or
an aid (100) according to any preceding claim, when dependent upon claim 2, in which the non-resilient material is coated in a material that is, in use, arranged to provide friction to hair to which the aid (100) is attached.

12. A method of grooming an equine comprising attaching an aid (100) comprising a body portion (108) to a bunch of hair, rolling the bunch of hair around the body portion (108) and subsequently moving attachment portions (104, 106) of the aid (100) from an open position in which hair can wrapped around the body portion (108) to a closed position in order to retain the aid (100) in place.

13. A method according to claim 12 which is repeated a plurality of times for the mane.

14. A method according to any of claims 12 to 13 in which the aid (100) is rotated, about an axis at an angle to which it will be rolled, before the hair is rolled around the body portion (108).

15. A method according to claim 14 in which the hair is rotated by a plurality of revolutions.

16. A method according to any of claims 12 to 15 in which moving of the attachment portions (104, 106) comprises deforming a portion of non-resilient material.

17. A method according to any of claims 12 to 16 which utilises the aid (100) of any of claims 1 to 14.

18. A method of training an equine's mane comprising applying the method of any of claims 12 to 17 to the mane.

19. A pack of aids (100) according to any of claims 1 to 14, such as a pack of roughly 10 to 15 aids (100).
